Europäisches Patentamt

European Patent Office

Office européen des brevets

(19)

(11) **EP 1 480 369 B1**

(12) **EUROPEAN PATENT SPECIFICATION**

(45) Date of publication and mention
of the grant of the patent:
**23.08.2006 Bulletin 2006/34**

(51) Int Cl.:
*H04L 7/02* (2006.01)    *H04B 1/707* (2006.01)

(21) Application number: **03011493.8**

(22) Date of filing: **21.05.2003**

(54) **Sampling device and method in digital receivers**

Anordnung und Verfahren zur Abtastung in digitalen Empfängern

Dispositif et procédé d'échantillonnage dans des récepteurs numériques

(84) Designated Contracting States:
**AT BE BG CH CY CZ DE DK EE ES FI FR GB GR HU IE IT LI LU MC NL PT RO SE SI SK TR**

(43) Date of publication of application:
**24.11.2004 Bulletin 2004/48**

(73) Proprietor: **TELEFONAKTIEBOLAGET LM ERICSSON (publ)**
**164 83 Stockholm (SE)**

(72) Inventors:
- **Lindoff, Bengt**
  **23736 Bjärred (SE)**
- **Nilsson, Johan**
  **21752 Malmö (SE)**
- **Reial, Andres**
  **22241 Lund (SE)**
- **Bernhardsson, Bo**
  **22475 Lund (SE)**

(74) Representative: **Karlsson, Leif Gunnar Börje et al**
**Ström & Gulliksson AB**
**P.O. Box 4188**
**203 13 Malmö (SE)**

(56) References cited:
**US-A1- 2002 126 735**     **US-B1- 6 314 130**
**US-B1- 6 549 594**

- **BALTERSEE J ET AL: "PERFORMANCE BOUNDS FOR A UMTS RAKE RECEIVER WITH IMPERFECT TIMING SYNCHRONISATION" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY: IEEE, US, vol. IA, 5 December 1999 (1999-12-05), pages 105-109, XP000958266 ISBN: 0-7803-5797-3**

## Description

## Technical Field

The present invention relates to a device and a method for improved sampling in digital receivers. In particular, the invention relates to the compensation of sampling errors of an A/D-converter at the input of a digital receiver, and even more particularly to the adjustment of sampling instants in a digital receiver.

## Description of Related Art

In mobile communication, several techniques for transmitting information to and from a mobile terminal, such as a mobile telephone, a pager, a communicator, i.e. an electronic organizer, a smartphone or the like, to another mobile terminal or a fixed unit, e.g. a base station, are available. These communication techniques include digital communication techniques, such as code division multiple access (CDMA). One communication technology based on the CDMA technology is wideband code division multiple access (WCDMA) that is currently employed for the universal mobile telecommunication system (UMTS) being developed within the third generation partnership project (3GPP). In digital communications systems, such as WCDMA systems, data is represented as binary information. WCDMA communication uses a digital radio link between a fixed unit, e.g. a base station, and a mobile radio unit, such as a mobile terminal. The term "digital radio link" implies that the binary information is transmitted via a wireless communication channel. However, the digital information has to be transformed to analogue signals in order to be transmitted over the air interface. The analogue signals are converted back to digital signals at the receiver for further processing.

Typically, the binary information is mapped to complex valued symbols and filtered by a pulse-shaping filter, and then up-converted to the carrier frequency and transmitted over the air interface. In the receiver, the reverse procedure is performed, i.e. the signal is down-converted to a baseband signal, filtered through a matched filter and sampled, after which the symbol decisions are made in the digital domain.

In order to achieve good detection performance, it is very important to find the optimal sampling instant, i.e. the time instant where the ratio between the signal power and the average noise power is maximised. In practical cellular systems, such as WCDMA, this is a complicated problem due to the fact that the clocks of the transmitter, e.g. a base station, and of the receiver, e.g. a mobile terminal, are not fully synchronised. In addition, duplicates of the same signal can arrive at different times, and with different signal strength at the receiver due to multiple reflections of the signal leading to multiple path delays.

In document EP-A2-0 704 984, the clock phase of a receiving A/D-converter is adjusted in order to minimise sampling errors caused by multipath reception. A similar approach is disclosed in document US-B1-6 266 365, wherein the sampling clock of a CDMA receiver A/D-converter is phase adjusted. Thus, both documents propose a sampling time adjustment approach that aligns the timing of the fingers of a RAKE receiver with the corresponding peaks in the power delay profile (PDP). The principle of a RAKE receiver is described below in more detail, but can also be retrieved from the standard literature, e.g. John G. Proakis, Digital Communications, McGraw Hill, 2001. The power delay profile (PDP) of a transmission channel is defined as the squared magnitude of a measured impulse response. From the PDP various channel parameters can be calculated. In the disclosure of EP-A2-0 704 984 only that finger of a RAKE receiver with the strongest signal is considered to adjust the ADC clock phase. Both patent documents disclose variants of an early/late sampling delay locked loop to determine the desired sampling instant. However, the early/late method is not robust when the peak in the PDP is not well defined, and may give rise to a significant fluctuation of the sampling instant for low SIR (signal to interference ratio) values or when the PDP includes several closely-spaced peaks.

Furthermore, the methods according to the above disclosures have the drawback that they do not consider whether it is advisable or not to adjust the sampling instant to the strongest path. The strongest path signal might be part of a tight cluster of paths, in which case it is certainly not advisable to modify the sampling instant.

In addition, due to the time spread in the pulse shaping filters in the receiver and transmitter and non-perfect sampling instant, the PDP can indicate several peaks, even if only one true radio path exists. This is because the pulse shaping has the effect of spreading the signal energy in time. Parts of this energy may be captured by despreader fingers, which are tuned to different delays that fall into the range of the pulse shape impulse response. Thus, despreaders placed at these suboptimal positions corresponding to the apparent peaks, experience increased Inter Chip Interference (ICI), which degrades the receiver performance. Sufficient oversampling typically solves this performance degradation. That means that an oversampling rate is chosen in such a way that the worst-case distance between the actual and the optimal sampling instant is so small that the performance degradation due to ICI becomes tolerable. For instance, in WCDMA it may be shown that 4 times oversampling (giving a maximum sampling error of 1/8 chip) is sufficient to avoid degrading the performance excessively due to non-perfect sampling. However, in high performance modes of WCDMA, such as HSDPA (High Speed Down-link Packet Access), the performance is much more sensitive to sampling errors. Thus, a higher oversampling rate is needed. Higher oversampling rate implies higher power consumption and more memory is needed for buffering. Thus it is desirable to reduce the oversampling rate as much as possible in order to save cost and power consumption.

Therefore, there is a need for methods and apparatus that make it possible to find the optimal sampling instant without increasing the oversampling rate and therefore also optimising the receiver performance under cost and power consumption constraints.

In document US 6,549,594 a method for timing phase recovery is disclosed. The method in this document includes the steps of first, estimating an open-eye sequence of a received signal, second, estimating a channel response using the open-eye sequence, and third, correlating the estimated channel response with an ideal channel response to determine the peak correlation location. The peak correlation location corresponds to the recovered timing phase. Also a system is disclosed in this document. The system includes means for estimating an open-eye sequence of a received signal, a channel estimator and a correlator is also provided. The channel estimator is used for estimating a channel response using the open-eye sequence and the received signal. The correlator is used for correlating the estimated channel response with an ideal channel response to determine the peak correlation location, the peak correlation location corresponding to the recovered timing phase.

**Summary of the Invention**

The present invention overcomes these deficiencies in the art and solves the above-identified problems by providing a device and method that compensate for sampling instant errors in digital receivers, such as in a mobile terminal, a mobile telephone, a pager, a communicator, or a base station, according to the appended independent claims.

According to the invention, a matched filtering based peak instant detection improves the robustness of the sampling adjustment. The invention is used in timing selection based on either ADC clock adjustment or downsampling phase selection. Additionally the invention allows for computation of a metric indication, i.e. a value for further processing, whereby the metric indication indicates whether the timing adjustment is advisable in an observed situation.

One object of the invention is to improve receiver performance in a cellular communication system, such as WCDMA, by using information from a path delay estimator. The received signal is down-converted and sampled, yielding a digital baseband signal. The digital baseband signal is then fed to a path delay estimator, which provides information about the power delay profile (PDP). Another object of the invention is defined as using knowledge of the receiver and transmitter filters used in the communication system and of the PDP, for computing the optimal sampling instant. A further object of the invention is to enhance the receiver performance, for example in high-performance modes such as HSDPA in WCDMA, while maintaining a moderate sampling rate and power consumption.

It should be emphasised that the term "comprises/comprising" when used in this specification is taken to specify the presence of stated features, integers, steps, or components, but does not preclude the presence or addition of one or more features, integers, steps, components or groups thereof.

The aforementioned objects of the invention are achieved by the method of independent claim 1 and by the device of independent claim 19.

Even if the description of the invention given here is directed to WCDMA systems, the invention can be used in any situations where a sampling instant needs to be adjusted to a peak position of a known pulse shape.

**Brief Description of the Drawings**

In the following the present invention will be described in relation to a number of embodiments and with reference to the accompanying drawings, in which:

Fig. 1 is a schematic diagram illustrating an exemplary mobile communication system comprising the device and performing the method according to the invention,
Fig. 2 is a block diagram illustrating a conventional RAKE receiver,
Fig. 3 is a set of timing diagrams illustrating the problems solved by the invention,
Fig. 4 is a block diagram of a RAKE receiver with timing adjustment of the ADC clock, according to one embodiment of the invention,
Fig. 5 is a block diagram of a RAKE receiver with matched filtering according to another embodiment of the invention,
Fig. 6 is a block diagram of a RAKE receiver with matched filtering according to yet another embodiment of the invention,
Fig. 7 is a flowchart illustrating the method of the invention,
Fig. 8 is a schematic diagram of an apparatus according to the invention, and
Fig. 9 is a schematic diagram of a computer readable medium according to the invention.

## Detailed description of embodiments

Various mobile communication systems utilise fixed base stations for communicating with mobile terminals via a wireless interface. Such systems include code division multiple access (CDMA) systems, e.g. the wide band code division multiple access (WCDMA) system employed in the universal mobile telecommunication system (UMTS).

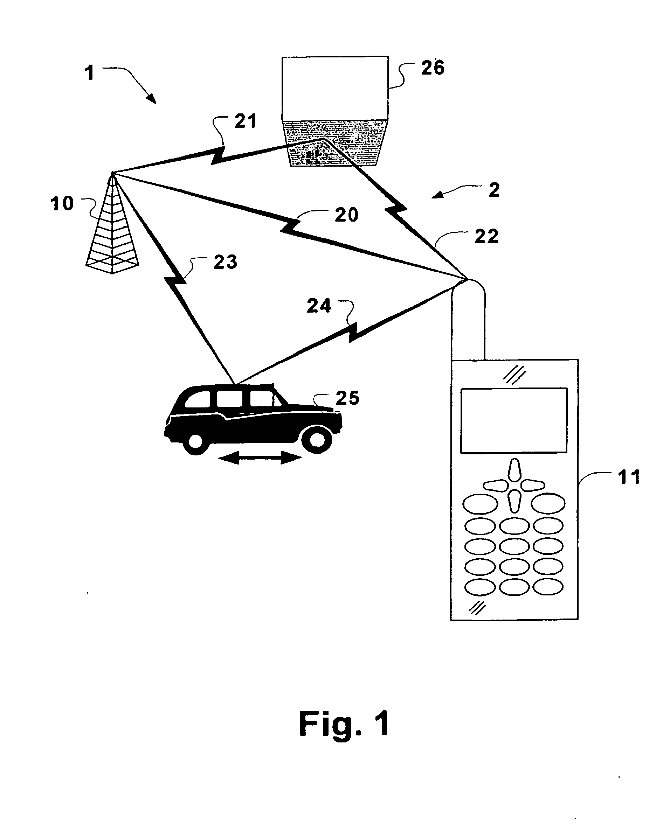

Fig. 1 illustrates such an exemplary mobile communication system 1 comprising the device and performing the method according to the invention. A mobile terminal 11, such as a mobile telephone, is communicating with a base station 10 via an air interface 2, wherein the term "air interface" is a common expression for wireless interfaces and should not be interpreted as limiting the interface to air. Transmission of a signal via exemplary signal paths 20 to 24 takes place in the analogue domain, as mentioned above. Via a first path 20 (E1) the signal is travelling directly from transmitter to receiver, and thus has the shortest propagation delay (e1) of the exemplary signal paths. This path usually results in the strongest received signal. When the signal is travelling along the path 21, 22 (E2) it is reflected by a fixed reflecting element 26, such as a building, and further transmitted to the receiver. In case the mobile terminal 11 is not moving relative to the base station 10, the propagation delay (e2) of the signal travelling along E2 is fixed and longer than that of signal path E1, (e2 > e1). The signal travelling along path 23, 24 (E3) is reflected at a moving reflecting element 25, such as a vehicle, and further transmitted to the receiver. The resulting propagation delay e3 is variable and it is larger than that of the signal travelling along E1, (e3 > e1). Usually, the strength of a signal travelling along E1 is larger than those of the signals travelling along E2 or E3. However, one of the signals travelling along E2 or E3 might be the strongest received signal due to an instantaneous fading situation. Alternatively, there may be an obstacle in the direct transmission path E1.

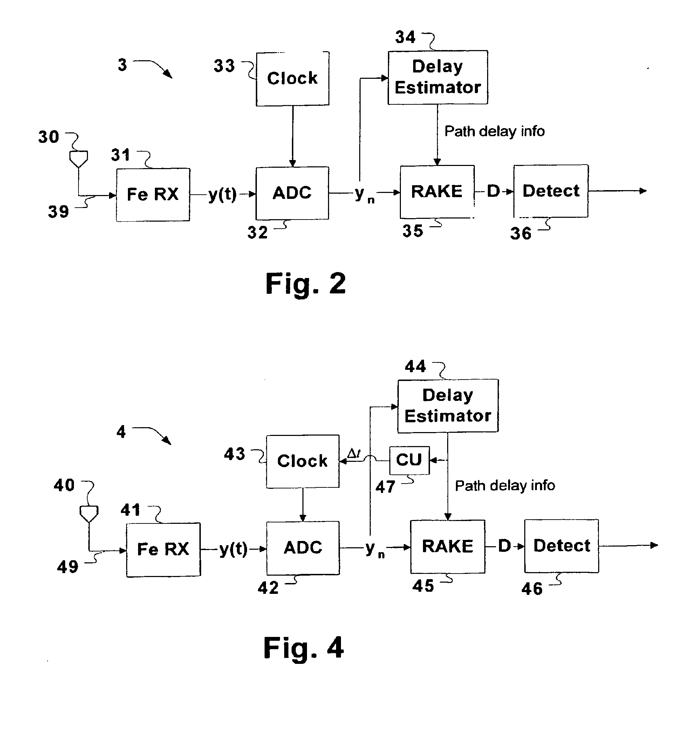

Fig. 2 shows a typical prior art WCDMA receiver structure 3. A signal 39 is received via antenna means 30 and is down converted and filtered to an analogue baseband signal, y(t), in a front-end receiver 31. This signal y(t) is then sampled and Analogue-to-Digital converted in ADC 32, resulting in the sampled signal $y_n$, preferably over sampled by a factor N > 1. The sampling instant of said A/D-converter 32 is based on the receiver's internal clock 33 and typically the signal could be sampled at N = 4 times the chip rate. In order to be able to demodulate the signal, the digital signal is fed to a delay estimator 34, also called a path searcher. The task of the delay estimator 34 is to find the radio propagation delays. Typically, this is done by correlating the received sequence with a pilot sequence and detecting peaks in the power delay profile (PDP), i.e. the squared filtered correlation sequence. The time lags representing the radio paths are then fed to the RAKE 35, which de-spreads the information signal. The output from RAKE 35, D, is the decision variable that is fed to the detector 36, which detects the symbols. The output from the detector 36 is the estimated bits corresponding to the received signal 39. Essentially, the RAKE output constitutes a "soft" received bit estimate, which is fed into the channel decoder, which in turn recovers the transmitted information bits, wherein these steps are performed using methods well known in the art.

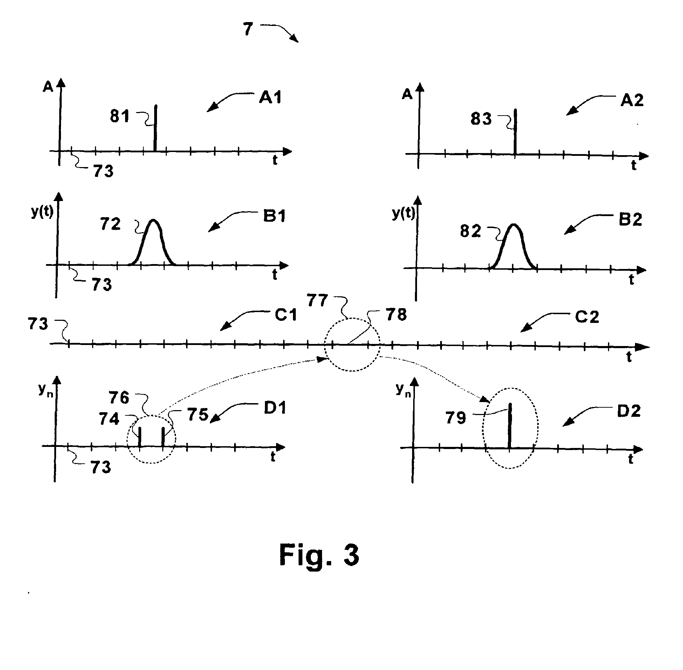

The invention is illustrated below with reference to Fig. 3, by one-tap channel case embodiments, as illustrated by graphs A1 and A2. The exemplary embodiments described herein are only for the sake of clarity and simpler illustration one-tap channel embodiments. However, the method is not limited to one-tap channel cases, and is equally applicable for multiple path cases. When there exist more than one path in the channel response, such as paths E1-E3 in the above mentioned example, the method could for example be modified to adjust the sampling instant so that it is aligned with a peak position of the strongest path, or to the strongest path having a good single-path match as will be described below in more detail.

The signals, illustrated as pulses 81, 83 in graphs A1 and A2 of Fig. 3, are received, down-converted, and sampled to a digital baseband signal as described above with reference to Fig. 2. The discrete time representations 76, 79 of the analogue signals 72, 82 are illustrated in graphs D1, D2 in Fig. 3. The PDP is shaped by the RX and TX filter impulse response which has a known shape 72, 82, as illustrated in Fig. 3 in graphs B1 and B2. The pulse shape is a composite of the RX and TX filters as the received signal from a mathematical point of view is the convolution of a transmitted symbol sequence, the TX filter response, the channel response, and the RX filter response. Therefore, the end-to-end channel consists of the three latter components, whereby these components are included in the observable PDP. For the sake of clarity and simpler illustration only the main lobe of the filter impulse response is shown in plots B1 and B2. If it happens that the true path location is between two digital samples 73, as illustrated in graph A1, the output D1 of the path searcher indicates that two strong paths 74, 75 are found because the sampling moment is not aligned to the peak of the impulse response y(t) as depicted in graph B1 in Fig. 3. This implies that two RAKE fingers are needed to handle this channel impulse response 76, each finger experiencing Inter Chip Interference (ICI) due to its suboptimal position. The mis-sampling is detected according to the invention, as described below, and the internal clock controlling the A/D-converter sampling instant 73 is adjusted, based on the path searcher output. This is illustrated in Fig.3 at 77, where the sampling sequence in graphs C1 and C2 is adjusted to the peak of pulse response 72. The new channel impulse response 82 and the path searcher output 79 indicates, thanks to the invention, one path with no ICI, as illustrated in graph D2.

The fact that the fingers experience ICI is, as stated above, due to the fact that ICI is determined by the amount of energy from the chips transmitted before and after the current chip that is mixed together with the energy from the current chip. This in turn is determined by the sampled version of the channel response. If the finger is placed optimally at the centre of the main lobe, as shown in graph B2 of Fig.3, no ICI is produced for an ideal raised-cosine response. This is due to the fact that the time instants being integer multiples of chip periods away from the centre of the main lobe coincide with zeroes in the channel response. In the case of suboptimal finger placement, the channel response is non-zero at these instants and ICI is added to the signal component. In addition, the signal power itself is not as strong in this case, which further degrades the signal-to-noise ratio. At this point it should also be noted that the practical TX and RX filters do not have the ideal shape and some ICI is produced under any finger placement, but it is minimised for the optimal alignment with the main lobe.

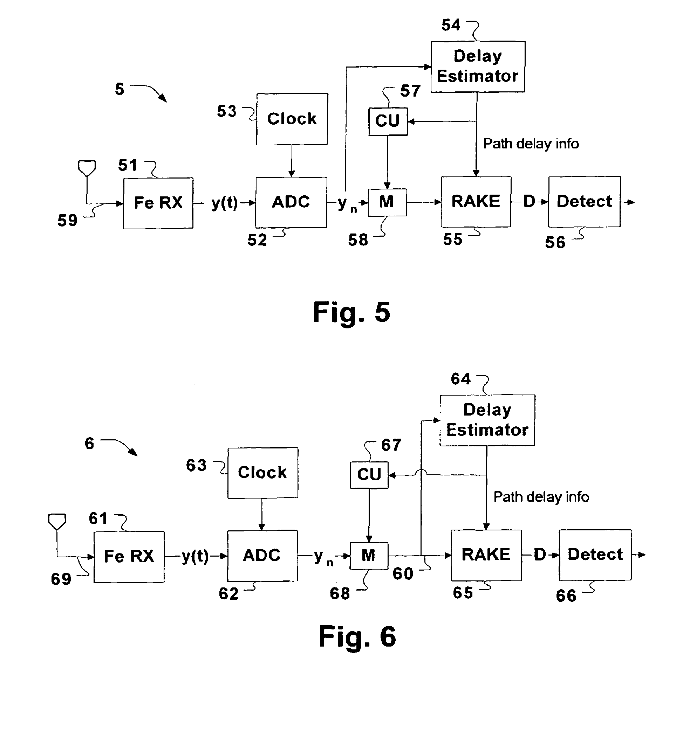

In Fig. 4 an A/D clock adjustment structure 4 is shown implementing the clock adjustment as illustrated in Fig. 3. A signal 49 received via antenna means 40 is down-converted in the front end receiver 41 (Fe RX) and filtered to an analogue baseband signal y(t). The signal y(t) is then sampled and Analogue-to-Digital converted in the A/D-converter 42, resulting in a sampled version $y_n$. The sampling instant is based on the internal clock 43 of the receiver device and typically the signal is sampled at N times the chip rate (oversampling). The signal $y_n$ is then fed into the delay estimator 44 whose task is to find the radio propagation delays. The path delays are obtained using methods well known in the art. That information is then fed to the RAKE 45, but also to a control unit (CU) 47. The control unit 47 then uses the path delay information and information about the transmitter and receiver filter to compute the difference between the actual and the optimal sampling instant, here called $\Delta t$. The difference is then fed to the clock logic unit 43. Unit 43 adjusts the phase of the clock of A/D converter 42 such that the sampling occurs at an optimal sampling instant.

A more detailed embodiment of how to compute the optimal sampling instant is now described in detail. Consider a delay profile containing a single path positioned at the delay d. The PDP estimate produced by the delay estimator consists of signal power values evaluated at time delays $t_k = kT_s$, where $T_s = T_c/N$ as shown in plot D1 in Figure 3. $T_c$ is the symbol period (e.g. the chip period in a CDMA system), and N is the oversampling rate. In general, $d \neq t_k$ for any k. Denote the estimated PDP values (plot D1) as $h_k$.

One embodiment of the invention determines the timing adjustment by using a pre-computed composite pulse shape of the transmission chain, consisting of the transmitter and receiver filters. It is this response that gives rise to the continuous-time power profile as described above. This end-to-end pulse shape is a raised-cosine impulse response with a given roll off factor if the TX and the RX filters are both root-raised-cosine impulse responses. Denote the continuous-time PDP response by g(t) and let its peak be aligned with t =0. The optimal timing is then found analogously to the matched filtering process, as

$$t^* = \arg\max_t \sum_{k=0}^{K} h_k g(t - kT_s)$$

In this way all possible delay hypotheses *t* are tested, and *t\*=t* is chosen for which the matched filter operation produces a maximum result.

If the PDP generation quality is sufficient, we will obtain $t^* \approx d$. In that case the matched filter result is maximised for the true delay *d*, since the measured pulse shape and the delayed reference waveform have the best match. The correction to the sampling phase is then defined as $\Delta t = t^* \bmod T_s$. The corrected sampling instants become

$t_k^{corr} = kT_s + \Delta t$ , i.e. the timing is advanced by a fraction $\Delta t / T_s$ of the sampling period.

According to a preferred embodiment, a lookup table of $g_l = g(lT_r)$ is stored, where $T_r$ is the target granularity of the timing adjustment grid and $l = \{0..L\}$ is the region of non-negative values of $l$, where $g(lT_r)$ assumes significant values, assuming that the response for $l < 0$ is symmetric. The search region is limited to the region of 2L+1 samples around the peak position $k_{max}$ that was detected in the PDP. L is the range where the end-to-end response $g_l$ assumes values significant above zero. L could be approximately 2 to 3 chips or 2N to 3N samples, wherein N is the oversampling ratio. The decision to be taken is then

$$j^* = \arg\max_{j=\{-L..L\}} \sum_{k=k_{max}-L}^{k=k_{max}+L} h_k g\left((k - k_{max})\frac{T_s}{T_r} - j\right)$$

and the timing correction $\Delta t = j^* T_r \bmod T_s$.

In another embodiment the method is made more robust against the physical situation where several paths make up a path cluster in the PDP. This is achieved by comparing the "shape" of the PDP against the discrete pulse shape $g_l$. In the case of a good single-path match, the ratios

$$r_k = \frac{h_k}{g\left((k - k_{\max})\dfrac{T_s}{T_r} - j^{\cdot}\right)} \qquad k = \{k_{\max} - L, \ldots, k_{\max} + L\}$$

should be relatively constant. Thus, we can use the estimated variance $\sigma_r^2 = \mathrm{var}\, r_k$ as a figure of merit. In this embodiment, the sampling is only adjusted if the variance does not exceed an empirically chosen threshold $\tau$, i.e. if $\sigma_r^2 < \tau$. Other alternative criteria could be used, for example the sampling is only adjusted if the number of detected paths is smaller than a threshold, or if the width of the strongest path cluster in the PDP is smaller than a threshold. Those alternative criteria are not covered by the claims and merely serve an illustrative purpose.

In most cases, when a well-defined strongest path exists in the PDP, it contributes most both to the received signal energy and to the interference experienced by other RAKE fingers, and it is beneficial to align sampling with this strongest available path. On the other hand, when the signal energy arrives in the form of a closely-spaced path cluster, constant re-adjustment should be avoided. Both goals are accomplished by the invention including the adjustment criterion.

In Figures 5 and 6, other examples of embodiments of the invention are shown. Here, instead of changing the clock reference, information about the optimal sampling instant is used to reduce the oversampling rate. The analogue signal 59, 69 is fed to the front end receiver 51, 61 (Fe RX) and is down-converted and filtered to an analogue baseband signal y(t). The signal y(t) is then sampled and Analogue-to-Digital converted in the A/D-converter 52, 62, resulting in a sampled version $y_n$. The sampling instant is based on the internal clock 53, 63 of the receiver device. The output from the A/D-converter 52, 62, which is oversampled at N times the chip rate, is down-sampled M times in down-sampling means 58, 68, resulting in a final oversampling rate of N/M into the RAKE 55, 65. The radio paths' delays are estimated as described above and the path delay information output from the delay estimator is fed to a control unit 57, 67 (CU) that computes, in a similar fashion as in the above embodiments, the optimal sampling instant. This is transformed to an equivalent sampling phase and that information is fed to the down-sampling unit that picks the correct phase in the down-sampling process. The delay estimator can either work on the N times oversampled signal $y_n$ as in Figure 5 or on the N/M times oversampled digital signal 60 as in Figure 6. The actual sampling rate in the RAKE is thus reduced with a factor M while a good receiver performance is maintained. Typical values for the oversampling rate reduction could be M = 4 or 2.

Yet another alternative embodiment allows the conceptual solution in Figures 5 and 6 to be used even when the input and RAKE oversampling rates are the same, in case the channel structure is not changing rapidly. The factor-M higher input sample rate can be emulated by collecting M different copies of the PDP, each with the sampling time offset of $\Delta t^{(i)} = i\dfrac{T_s}{M}$. By overlapping them and applying the method as described above, the optimal timing advance can be determined.

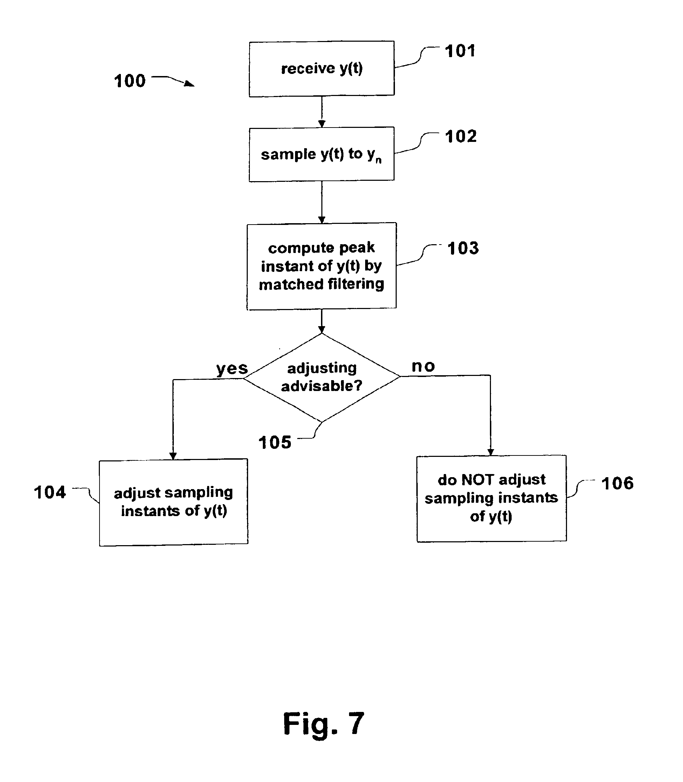

According to another embodiment of the invention, a method is now described with reference to Fig. 7. An analogue transmission signal, such as the signal 49 received via antenna means 40 in Fig. 4, is received in step 101 in the front end receiver 41 (Fe RX) down converted and filtered to an analogue baseband signal y(t). The signal y(t) is then sampled and Analogue-to-Digital converted in step 102 in the A/D-converter 42, giving a sampled version $y_n$. In step 103, the position of a peak instant of said received signal is computed by matched filtering detection based on at least one feedback signal from a delay estimator in said receiver system. Subsequently, the sampling instants of said received signal are adjusted in step 104 to said peak instant, in case the sampling instant adjustment is regarded suitable in step 105. Step 105 comprises computing of a metric indicating whether it is suitable to adjust the sampling instants in a certain receiving situation at the moment of receiving said signal. In case the metric indication suggests that adjustment is not suitable, the sampling instants of y(t) are not adjusted, according to step 106.

According to a further embodiment of the invention, a device 8 for compensating sampling instant errors in a digital receiver system comprises an A/D-converter 85 and a delay estimator 86. In use of said device an analogue transmission signal 84 is received in the system by device 8. Signal 84 is sampled by the A/D-converter 85 at defined sampling instants. Device 8 further comprises means 87 for computing the position of a peak instant of said received signal 84. More specifically, the peak instant detection is based on matched filtering detection. Subsequently a means 88 adjusts the sampling instants of the received signal to the detected peak instant. Preferably a feedback signal from delay estimator 86 is used for computing the peak instant.

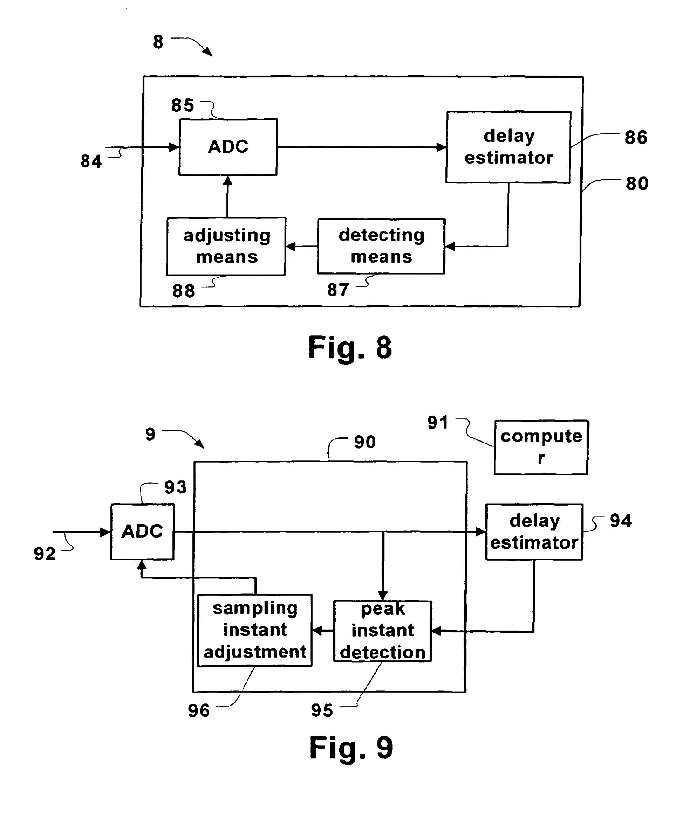

A computer readable medium 9 is shown in Fig. 9. The medium 9 includes a computer program for compensating sampling instant errors in a digital receiver system, for processing by a computer 91. An analogue signal is received in said receiver system and sampled in unit 93. The computer program comprises a first code segment 95 for detecting a peak instant of said received signal 92 by matched-filtering detection based on signals from a delay estimator 94. Furthermore, the program comprises a second code segment 96 for adjusting the sampling instant of said received signal 92 to said peak instant. This example is not covered by the claims and is merely included for illustrative purposes.

The present invention has been described with reference to different embodiments. However, the scope of the invention should not be limited to the above-described embodiments, but is best defined by the following patent claims. Furthermore, the term "comprising" does not exclude other elements or steps, the terms "a" and "an" do not exclude a plurality and a single processor or other units may fulfil the functions of several of the units recited in the claims.

## Claims

1. A method of adjusting sampling instants in a digital receiver system, wherein an analogue transmission signal (49, 59, 69, 84) is received (101) in said digital receiver system and said signal is sampled (102) at defined sampling instants (73), comprising the steps of:

   computing the position of a peak instant (103) of said received signal by matched filtering of an estimated power delay profile, PDP, with a known pulse shape;
   computing a metric indication indicating whether a sampling instant adjustment is to be performed (105) in a receiving situation at the moment of receiving said signal, and in case said metric indication indicates that adjustment is to be performed (105),
   adjusting said sampling instants (104) of said received signal to said peak instant

   **characterized in that** said step of computing said metric comprises comparing the shape of the PDP of said digital receiver system against said known pulse shape, wherein said metric is the variance of the ratios of PDP values to pulse shape values, and performing the sampling instant adjustment in case said metric does not exceed a threshold.

2. The method according to claim 1, wherein said matched filtering detection is based on at least one feedback signal from a delay estimator (44, 54, 64, 86, 94) in said receiver system.

3. The method according to claim 1 or 2, wherein said digital receiver system comprises a RAKE receiver (45, 55, 65) in a mobile communication system, said RAKE receiver (45, 55, 65) processing said sampled received signal $(y_n)$.

4. The method according to claim 2 or 3, wherein said digital receiver system has a transmission chain impulse response, and
   wherein a pre-computed pulse shape of said transmission chain impulse response is used for said matched filtering detection based on said signals from said delay estimator in said receiver system.

5. The method according to claim 4, wherein said pre-computed pulse shape of the transmission chain impulse response comprises transmitter and receiver filters.

6. The method according to claim 4 or 5, wherein said pulse shape is a raised-cosine pulse.

7. The method according to any of claims 4 to 6, wherein said pulse shape is stored in a lookup table of discrete values.

8. The method according to claim 1, wherein said threshold is empirically chosen.

9. The method according to claims 1 to 3, wherein information about the optimal sampling instant is used to adjust the clock (43, 53, 63) or the clock phase of said A/D-converter (42, 52, 62, 82, 85).

10. The method according to any of claims 1 to 3, wherein the step of adjusting said sampling instants (104) is further **characterised by** the step of:

choosing the optimal down-sampling phase, wherein information about the optimal sampling instant is used to reduce an oversampling rate N of an A/D-converter (52, 62) with a factor M in said receiver, and wherein said A/D-converter (52, 62) samples said analogue transmission signal.

**11.** The method according to claim 3, wherein the step of adjusting said sampling instants (104) is further **characterised by** the step of
choosing the optimal down-sampling phase, wherein information about the optimal sampling instant is used to reduce an oversampling rate N of the input to the RAKE (55, 65) with a factor M in said receiver.

**12.** The method according to claim 11, wherein the delay estimator works on the N times oversampled signal ($y_n$).

**13.** The method according to claim 11, wherein the delay estimator works on the N/M times oversampled signal (60).

**14.** The method according to claim 10, wherein the oversampling rates in said A/D-converter (ADC) (42, 52, 62, 85) and at the input of the RAKE are the same, further comprising the steps of:

emulating the factor-M higher ADC sample rate by collecting M different copies of the PDP, each with the sampling time offset of $\Delta t^{(i)} = i \dfrac{T_s}{M}$, wherein i=0,...,M-1, $T_s$ is the sampling time, and

overlapping said copies.

**15.** The method according to any of claims 1 to 14, wherein the sampling time adjustment is applied to the strongest detected path.

**16.** The method according to any of the preceding claims, wherein said receiver is a mobile terminal.

**17.** The method according to claim 16, wherein said mobile terminal is a mobile telephone.

**18.** The method according to any of claims 1 to 15, wherein said receiver is a base station.

**19.** A device (4, 5, 6, 8) for adjusting sampling instants in a digital receiver system, having an A/D-converter (ADC) (42, 52, 62, 85) and a delay estimator (44, 54, 64, 86, 94), wherein in use of said device an analogue transmission signal (49, 59, 69, 84) is received in said system and said signal is sampled by said A/D-converter (ADC) (42, 52, 62, 85) at defined sampling instants, comprising:

means for computing the position of a peak instant (47, 57, 67, 87) of said received signal (49, 59, 69, 84) by matched filtering detection based signals from said delay estimator (44, 54, 64, 94), the matched filtering detection being a matched filtering of an estimated power delay profile, PDP, with a known pulse shape;
means for computing a metric indication indicating whether said sampling instant adjustment is to be performed in a receiving situation at the moment of receiving said signal,
means for allowing adjustment of said sampling instants depending on said metric indication, and
means for adjusting said sampling instants (88) of said received signal to said peak instant in case said metric indication indicates that adjustment is to be performed (105)

**characterized in that** said means for computing a metric indication is adapted to compute by comparing the shape of the PDP of said digital receiver system against said known pulse shape of a transmission chain, wherein said metric is the variance of the ratios of PDP values to pulse shape values, and the adjustment is to be performed in case said metric does not exceed a threshold.

**20.** The device according to claim 19, further **characterised in that** said received signal (49) is down converted and filtered to an analogue baseband signal (y(t)) in a front end receiver (41), said analogue baseband signal (y(t)) is subsequently sampled and Analogue-to-Digital converted in said A/D-converter (42) and said sampling instants being based on an internal clock (43) of said receiver device, resulting in a sampled signal ($y_n$) of said analogue baseband signal (y(t)), and said sampled signal ($y_n$) subsequently being fed into said delay estimator (44).

**21.** The device according to claim 20, further **characterised in that** radio path propagation delay information for said received signal (49, 59, 69, 84) is obtained from said delay estimator (44) and that information is subsequently fed to a RAKE (45) and concurrently to said means (47) for computing the position of a peak instant of said received signal, said means (47) using said path delay information and information about the transmitter and receiver filters to compute the difference between the actual and the optimal sampling instant, and

said means for adjusting said sampling instants (88) of said received signal to said peak instant being a clock logic stage (43) adjusting the clock of said A/D converter (42) with said difference.

22. The device according to claim 20, wherein said means (47) for computing the position of said peak instant computes said difference from a pre-computed composite pulse shape of the transmission chain, consisting of the transmitter and receiver filters.

23. The device according to claim 20, further **characterised in that** said sampling instant is based on an internal clock (53, 63) of the receiver device,

said sampled signal ($y_n$) being oversampled at a sampling rate N subsequently being fed into a down-sampling means (58, 68) working at a sampling rate M, the output (60) from said down-sampling means (58, 68) being fed into a RAKE (55, 65) at an oversampling rate of N/M,

the radio path delays are estimated by said delay estimator (54, 64),

the path delay information output from the delay estimator (54, 64) is fed to a control unit (57, 67),

said control unit (57, 67) computes an optimal sampling instant information and transforms said information to an equivalent sampling phase, and

that information is fed to said down-sampling means (58, 68) correcting the sampling phase of said a down-sampling means (58, 68).

24. The device according to claim 23, further **characterised in that** said delay estimator (54, 64) is fed with said N times oversampled signal ($y_n$).

25. The device according to claim 23, further **characterised in that** said delay estimator (54, 64) is fed with said N/M times oversampled digital signal (60).

26. The device according to any of claims 23 to 25, wherein the oversampling rates in said A/D-converter (ADC) (42, 52, 62, 85) and at the input of the RAKE are the same, further **characterised in that** said device collects M different copies of the PDP, each with the sampling time offset of $\Delta t^{(i)} = i \dfrac{T_s}{M}$ , wherein i=0, ...,M-1, $T_s$ is the sampling time, and

said collected copies are overlapped by said device.

27. The device according to any of claims 19 to 26, further comprising:

means for computing a metric indication indicating whether said sampling instant adjustment is advisable in a receiving situation at the moment of receiving said signal, and

means for allowing adjustment of said sampling instants depending on said metric indication.

28. The device according to any of claims 19 to 27, **characterised in that** said receiver is a mobile terminal.

29. The device according to any of claims 19 to 27, **characterised in that** said receiver is a base station.

**Patentansprüche**

1. Verfahren zum Anpassen von Abtastaugenblicken in einem digitalen Empfängersystem, wobei ein analoges Übertragungssignal (49, 59, 69, 84) in dem digitalen Empfängersystem empfangen wird (101) und das Signal in festgelegten Abtastaugenblicken (73) abgetastet wird (102), die folgenden Schritte umfassend:

Berechnen der Position eines Spitzenaugenblicks (103) des empfangenen Signals durch vergleichendes Filtern eines geschätzten Leistungsverzögerungsprofils, PDP, mit einer bekannten Impulsform,

Berechnen einer metrischen Angabe, die angibt, ob eine Abtastaugenblickanpassung in einer Empfangssituation in dem Augenblick des Empfangens des Signals durchzuführen ist (105), und in dem Fall, in dem die metrische Angabe angibt, dass Anpassung durchzuführen ist (105)
Anpassen der Abtastaugenblicke (104) des empfangenen Signals an den Spitzenaugenblick,

**dadurch gekennzeichnet, dass** der Schritt des Berechnens der metrischen Angabe, das Vergleichen der Form des PDP des digitalen Empfängersystems mit der bekannten Impulsform umfasst, wobei die metrische Angabe die Varianz der Verhältnisse von PDP-Werten zu Impulsformwerten ist, und Durchführen des Abtastaugenblickanpassens in dem Fall, in dem die metrische Angabe einen Schwellenwert nicht überschreitet.

2. Verfahren nach Anspruch 1, wobei das vergleichende Filtererfassen auf mindestens einem Feedbacksignal von einem Verzögerungsschätzer (44, 54, 64, 86, 94) in dem Empfängersystem beruht.

3. Verfahren nach Anspruch 1 oder 2, wobei das digitale Empfängersystem einen RAKE-Empfänger (45, 55, 65) in einem Mobilkommunikationssystem umfasst, wobei der RAKE-Empfänger (45, 55, 65) das abgetastete empfangene Signal ($y_n$) verarbeitet.

4. Verfahren nach Anspruch 2 oder 3, wobei das digitale Empfängersystem eine Übertragungskettenimpulsantwort hat, und
wobei eine vorausberechnete Impulsform der Übertragungskettenimpulsantwort zum vergleichenden Filtererfassen auf der Grundlage der Signale von dem Verzögerungsschätzer in dem Empfängersystem verwendet wird.

5. Verfahren nach Anspruch 4, wobei die vorab berechnete Impulsform der Übertragungskettenimpulsantwort Sender- und Empfängerfilter aufweist.

6. Verfahren nach Anspruch 4 oder 5, wobei die Impulsform ein Raised-Cosine-Impuls ist.

7. Verfahren nach einem der Ansprüche 4 bis 6, wobei die Impulsform in einer Nachschlagtabelle diskreter Werte gespeichert ist.

8. Verfahren nach Anspruch 1, wobei der Schwellenwert empirisch ausgewählt wird.

9. Verfahren nach den Ansprüchen 1 bis 3, wobei Information über den optimalen Abtastaugenblick verwendet wird, um den Taktgeber (43, 53, 63) oder die Taktgeberphase des A/D-Wandlers (42, 52, 62, 82, 85) anzupassen.

10. Verfahren nach einem der Ansprüche 1 bis 3, wobei der Schritt des Anpassens der Abtastaugenblicke (104) ferner charakterisiert ist durch den Schritt:

des Auswählens der optimalen Downsamplingphase, wobei Information über den optimalen Abtastaugenblick verwendet wird, um eine Überabtastrate N eines A/D-Wandlers (52, 62) um einem Faktor M in dem Empfänger zu verringern, und wobei
der A/D-Wandler (52, 62) das analoge Übertragungssignal abtastet.

11. Verfahren nach Anspruch 3, wobei der Schritt des Anpassens der Abtastaugenblicke (104) ferner **gekennzeichnet ist durch** den Schritt des
Auswählens der optimalen Downsamplingphase, wobei Information über den optimalen Abtastaugenblick verwendet wird, um eine Überabtastrate N des Eingangs zu dem RAKE-Empfänger (55, 65) um einem Faktor M in dem Empfänger zu verringern.

12. Verfahren nach Anspruch 11, wobei der Verzögerungsschätzer an dem N Mal überabgetasteten Signal ($y_n$) arbeitet.

13. Verfahren nach Anspruch 11, wobei der Verzögerungsschätzer an dem N/M Mal überabgetasteten Signal (60) arbeitet.

14. Verfahren nach Anspruch 10, wobei die Überabtastraten in dem A/D-Wandler (ADC) (42, 52, 62, 85) und an dem Eingang des RAKE-Empfängers die gleichen sind, ferner umfassend die folgenden Schritte:

Emulieren der Faktor M höheren A/D-Wandler-(ADC)Abtastrate durch Sammeln M unterschiedlicher Kopien des PDP, jede mit einem Abtastzeitoffset von $\Delta t^{(i)} = i \dfrac{T_s}{M}$, wobei i=0, ..., M-1, $T_s$ die Abtastzeit ist und Überlappen der Kopien.

15. Verfahren nach einem der Ansprüche 1 bis 14, wobei die Abtastzeitanpassung an den stärksten erfassten Pfad angewandt wird.

16. Verfahren nach einem der vorhergehenden Ansprüche, wobei der Empfänger ein Mobilterminal ist.

17. Verfahren nach Anspruch 16, wobei das Mobilterminal ein Mobiltelefon ist.

18. Verfahren nach einem der Ansprüche 1 bis 15, wobei der Empfänger eine Basisstation ist.

19. Vorrichtung (4, 5, 6, 8) zum Anpassen von Abtastaugenblicken in einem digitalen Empfängersystem, das einen A/D-Wandler (ADC) (42, 52, 62, 85) und einen Verzögerungsschätzer (44, 54, 64, 86, 94) hat, wobei beim Gebrauch des Geräts ein analoges Übertragungssignal (49, 59, 69, 84) in dem System empfangen und das Signal von dem A/D-Wandler (ADC) (42, 52, 62, 85) in festgelegten Abtastaugenblicken abgetastet wird, umfassend:

   Mittel zum Berechnen der Position eines Spitzenaugenblicks (47, 57, 67, 87) des empfangenen Signals (49, 59, 69, 84) durch vergleichende Signale, die auf Filtererfassung basieren, von dem Verzögerungsschätzer (44, 54, 64, 94), wobei das vergleichende Filtererfassen ein vergleichendes Filtererfassen eines geschätzten Leistungsverzögerungsprofils, PDP, mit einer bekannten Impulsform ist,
   Mittel zum Berechnen einer metrischen Angabe, die angibt, ob die Abtastaugenblickanpassung in einer Empfangssituation in dem Augenblick des Empfangens des Signals durchzuführen ist,
   Mittel zum Erlauben des Anpassens der Abtastaugenblicke in Abhängigkeit von der metrischen Angabe und
   Mittel zum Anpassen der Abtastaugenblicke (88) des empfangenen Signals an den Spitzenaugenblick, in dem Fall, in dem die metrische Angabe angibt, dass die Anpassung durchzuführen ist (105)

   **dadurch gekennzeichnet, dass** das Mittel zum Berechnen einer metrischen Angabe geeignet ist zu berechnen, indem die Form des PDP des digitalen Empfängersystems mit der bekannten Impulsform einer Übertragungskette verglichen wird, wobei die metrische Angabe die Varianz der Verhältnisse von PDP-Werten zu Impulsformwerten ist, und die Anpassung in dem Fall durchzuführen ist, in dem die metrische Angabe einen Schwellenwert nicht überschreitet.

20. Vorrichtung nach Anspruch 19, ferner **gekennzeichnet dadurch, dass** das empfangene Signal (49) in einem Front-End-Empfänger (41) abwärts umgewandelt und gefiltert wird zu einem analogen Basisbandsignal (y(t)), wobei das analoge Basisbandsignal (y(t)) danach abgetastet und in dem A/D-Wandler (42) analog zu digital umgewandelt wird, wobei die Abtastaugenblicke auf einem internen Taktgeber (43) der Empfängervorrichtung basieren, was in einem abgetasteten Signal ($y_n$) des analogen Basisbandsignals (y(t)) resultiert, und wobei das abgetastete Signal ($y_n$) anschließend in den Verzögerungsschätzer (44) eingespeist wird.

21. Vorrichtung nach Anspruch 20, ferner **gekennzeichnet dadurch, dass** Funkpfadausbreitungs-Verzögerungsinformation für das empfangene Signal (49, 59, 69, 84) von dem Verzögerungsschätzer (44) erzielt wird, und dass die Information anschließend in einen RAKE-Empfänger (45) eingespeist wird und gleichzeitig in das Mittel (47) zum Berechnen der Position eines Spitzenaugenblicks des empfangenen Signals, wobei das Mittel (47) die Pfadverzögerungsinformation und Information über die Sender- und Empfängerfilter verwendet, um den Unterschied zwischen dem aktuellen und dem optimalen Abtastaugenblick zu berechnen, und dass das Mittel zum Anpassen der Abtastaugenblicke (88) des empfangenen Signals an den Spitzenaugenblick eine logische Stufe (43) des Taktgebers ist, die den Taktgeber des A/D-Wandlers (42) mit dem Unterschied anpasst.

22. Vorrichtung nach Anspruch 20, wobei das Mittel (47) zum Berechnen der Position des Spitzenaugenblicks den Unterschied aus einer vorab berechneten Kompositimpulsform der Übertragungskette bestehend aus den Sender- und Empfängerfiltern berechnet.

23. Vorrichtung nach Anspruch 20, ferner **gekennzeichnet dadurch, dass** der Abtastaugenblick auf einem internen Taktgeber (53, 63) der Empfängervorrichtung beruht, wobei das abgetastete Signal ($y_n$) mit einer Abtastrate N überabgetastet und anschließend in ein Downsamplingmittel (58, 68) eingespeist wird, das mit einer Abtastrate M funktioniert, wobei der Ausgang (60) des Downsamplingmittels (58, 68) in einen RAKE-Empfänger (55, 65) mit einer Überabtastrate von N/M eingespeist wird,

dass die Funkpfadverzögerungen von dem Verzögerungsschätzer (54, 64) geschätzt werden,

dass die Pfadverzögerungsinformation, die von dem Verzögerungsschätzer (54, 64) ausgegeben wird, in eine Steuereinheit (57, 67) eingespeist wird,

dass die Steuereinheit (57, 67) eine optimale Abtastaugenblickinformation berechnet und die Information in eine äquivalente Abtastphase umwandelt, und

dass die Information in das Downsamplingmittel (58, 68) eingespeist wird, wobei die Abtastphase des Downsamplingmittels (58, 68) korrigiert wird.

**24.** Vorrichtung nach Anspruch 23, ferner **gekennzeichnet dadurch, dass** in den Verzögerungsschätzer (54, 64) das N Mal überabgetastete Signal ($y_n$) eingespeist wird.

**25.** Vorrichtung nach Anspruch 23, ferner **gekennzeichnet dadurch, dass** das N/M Mal überabgetastete digitale Signal (60) in den Verzögerungsschätzer (54, 64) eingespeist wird.

**26.** Vorrichtung nach einem der Ansprüche 23 bis 25, wobei die Überabtastraten in dem A/D-Wandler (ADC) (42, 52, 62, 85) und an dem Eingang des RAKE-Empfängers die gleichen sind, ferner **gekennzeichnet dadurch, dass** die Vorrichtung M verschiedene Kopien von PDP sammelt, jeweils mit dem Abtastzeitoffset von $\Delta t^{(i)} = i \dfrac{T_s}{M}$ , wobei i=0, ..., M-1, $T_s$ die Abtastzeit ist und die gesammelten Kopien von der Vorrichtung überlappt werden.

**27.** Vorrichtung nach einem der Ansprüche 19 bis 26, ferner umfassend:

Mittel zum Berechnen einer metrischen Angabe, die angibt, ob die Abtastaugenblickanpassung in einer Empfangssituation in dem Augenblick des Empfangens des Signals ratsam ist, und

Mittel, um das Anpassen der Abtastaugenblicke in Abhängigkeit von der metrischen Angabe zu gestatten.

**28.** Vorrichtung nach einem der Ansprüche 19 bis 27, **dadurch gekennzeichnet, dass** der Empfänger ein Mobilterminal ist.

**29.** Vorrichtung nach einem der Ansprüche 19 bis 27, **dadurch gekennzeichnet, dass** der Empfänger eine Basisstation ist.


**Revendications**

**1.** Procédé d'ajustement des instants d'échantillonnage dans un système récepteur numérique, dans lequel un signal de transmission analogique (49, 59, 69, 84) est reçu (101) dans ledit système récepteur numérique et ledit signal est échantillonné (102) à des instants d'échantillonnage définis (73), comprenant les étapes consistant à :

calculer la position d'un instant de crête (103) dudit signal reçu en appliquant un filtrage adapté d'un profil estimé de retard de la puissance (PDP, pour « *Power Delay Profile* ») avec une forme d'impulsion connue ;

calculer une indication métrique indiquant s'il faut réaliser un ajustement de l'instant d'échantillonnage (105), dans une situation de réception, au moment de la réception dudit signal, et si ladite indication métrique indique que l'ajustement doit avoir lieu (105),

ajuster lesdits instants d'échantillonnage (104) dudit signal reçu sur ledit instant de crête,

**caractérisé en ce que** ladite étape de calcul de ladite indication métrique comprend une comparaison de la forme du profil PDP dudit système récepteur numérique avec ladite forme d'impulsion connue, dans lequel ladite indication métrique est la variance des rapports entre les valeurs du profil PDP et les valeurs de la forme d'impulsion, et une exécution de l'ajustement de l'instant d'échantillonnage si ladite indication métrique n'excède pas un certain seuil.

**2.** Procédé selon la revendication 1, dans lequel ladite détection par filtrage adapté est fondée sur au moins un signal de contre-réaction provenant d'un estimateur de retards (44, 54, 64, 86, 94) dans ledit système récepteur.

3. Procédé selon la revendication 1 ou 2, dans lequel ledit système récepteur numérique comprend un récepteur en râteau (45, 55, 65) dans un système de communication mobile, ledit récepteur en râteau (45, 55, 65) traitant ledit signal reçu et échantillonné ($y_n$).

4. Procédé selon la revendication 2 ou 3, dans lequel ledit système récepteur numérique possède une réponse impulsionnelle de chaîne de transmission, et
dans lequel une forme d'impulsion précalculée de ladite réponse impulsionnelle de la chaîne de transmission est utilisée pour ladite détection par filtrage adapté, sur la base desdits signaux provenant dudit estimateur de retards dans ledit système récepteur.

5. Procédé selon la revendication 4, dans lequel ladite forme d'impulsion précalculée de la réponse impulsionnelle de la chaîne de transmission comprend des filtres d'émetteur et de récepteur.

6. Procédé selon la revendication 4 ou 5, dans lequel ladite forme d'impulsion est une impulsion en cosinus surélevé.

7. Procédé selon l'une quelconque des revendications 4 à 6, dans lequel ladite forme d'impulsion est stockée dans une table de consultation regroupant des valeurs discrètes.

8. Procédé selon la revendication 1, dans lequel ledit seuil est sélectionné empiriquement.

9. Procédé selon les revendications 1 à 3, dans lequel des informations sur l'instant optimal d'échantillonnage sont utilisées pour ajuster l'horloge (43, 53, 63) ou la phase d'horloge dudit convertisseur analogique-numérique (42, 52, 62, 82, 85).

10. Procédé selon l'une quelconque des revendications 1 à 3, dans lequel l'étape d'ajustement desdits instants d'échantillonnage (104) est en outre **caractérisée par** l'étape consistant à :

    choisir la phase optimale de sous-échantillonnage,

    dans lequel des informations sur l'instant optimal d'échantillonnage sont utilisées pour réduire un taux de suréchantillonnage N d'un convertisseur analogique-numérique (52, 62) d'un facteur M dans ledit récepteur, et
    dans lequel ledit convertisseur analogique-numérique (52, 62) échantillonne ledit signal analogique de transmission.

11. Procédé selon la revendication 3, dans lequel l'étape d'ajustement desdits instants d'échantillonnage (104) est en outre **caractérisée par** l'étape consistant à :

    choisir la phase optimale de sous-échantillonnage,

    dans lequel des informations sur l'instant optimal d'échantillonnage sont utilisées pour réduire un taux de suréchantillonnage N de l'entrée du râteau (55, 65) d'un facteur M dans ledit récepteur.

12. Procédé selon la revendication 11, dans lequel l'estimateur de retards fonctionne sur le signal suréchantillonné N fois ($y_n$).

13. Procédé selon la revendication 11, dans lequel l'estimateur de retards fonctionne sur le signal suréchantillonné N/M fois (60).

14. Procédé selon la revendication 10, dans lequel les taux de suréchantillonnage dans ledit convertisseur analogique-numérique (CAN) (42, 52, 62, 85) et à l'entrée du râteau sont les mêmes,
comprenant en outre les étapes consistant à :

    émuler le taux d'échantillonnage du CAN augmenté d'un facteur M en recueillant M exemplaires différents du profil PDP, chacun avec le décalage d'instant d'échantillonnage de $\Delta t^{(i)} = i \dfrac{T_s}{M}$ où i = 0, ..., M - 1 et $T_s$ est l'instant d'échantillonnage, et superposer lesdits exemplaires.

15. Procédé selon l'une quelconque des revendications 1 à 14, dans lequel l'ajustement de l'instant d'échantillonnage est appliqué au trajet détecté le plus intense.

**16.** Procédé selon l'une quelconque des revendications précédentes, dans lequel ledit récepteur est un terminal mobile.

**17.** Procédé selon la revendication 16, dans lequel ledit terminal mobile est un téléphone mobile.

**18.** Procédé selon l'une quelconque des revendications 1 à 15, dans lequel ledit récepteur est une station de base.

**19.** Dispositif (4, 5, 6, 8) destiné à ajuster des instants d'échantillonnage dans un système récepteur numérique possédant un convertisseur analogique-numérique (CAN) (42, 52, 62, 85) et un estimateur de retards (44, 54, 64, 86, 94), dans lequel, dans l'utilisation dudit dispositif, un signal de transmission analogique (49, 59, 69, 84) est reçu dans ledit système et ledit signal est échantillonné par ledit convertisseur analogique-numérique (CAN) (42, 52, 62, 85) à des instants d'échantillonnage définis, comprenant :

un moyen destiné à calculer la position d'un instant de crête (47, 57, 67, 87) dudit signal reçu (49, 59, 69, 84) par détection par filtrage adapté sur la base de signaux provenant dudit estimateur de retards (44, 54, 64, 86, 94), la détection par filtrage adapté étant un filtrage adapté d'un profil estimé de retard de la puissance (PDP) avec une forme d'impulsion connue ;
un moyen destiné à calculer une indication métrique indiquant s'il faut réaliser un ajustement de l'instant d'échantillonnage, dans une situation de réception, au moment de la réception dudit signal ;
un moyen destiné à autoriser l'ajustement desdits instants d'échantillonnage en fonction de ladite indication métrique ; et
un moyen destiné à ajuster lesdits instants d'échantillonnage (88) dudit signal reçu sur ledit instant de crête, si ladite indication métrique indique qu'un ajustement doit avoir lieu (105),

**caractérisé en ce que** ledit moyen de calcul d'indication métrique est adapté pour calculer par une comparaison de la forme du profil PDP dudit système récepteur numérique avec ladite forme d'impulsion connue d'une chaîne de transmission, dans lequel ladite indication métrique est la variance des rapports entre les valeurs du profil PDP et les valeurs de la forme d'impulsion et l'ajustement est à faire au cas où ladite indication métrique n'excède pas un certain seuil.

**20.** Dispositif selon la revendication 19, **caractérisé en outre en ce que** ledit signal reçu (49) est abaissé en fréquence et filtré pour donner un signal analogique en bande de base ($y(t)$) dans un récepteur frontal (41), ledit signal analogique en bande de base ($y(t)$) est ensuite échantillonné et subit une conversion analogique-numérique dans ledit convertisseur analogique-numérique (42) et lesdits instants d'échantillonnage sont fondés sur une horloge interne (43) dudit dispositif récepteur, ce qui résulte en un signal échantillonné ($y_n$) dudit signal analogique en bande de base ($y(t)$), ledit signal échantillonné ($y_n$) étant ensuite injecté audit estimateur de retards (44).

**21.** Dispositif selon la revendication 20, **caractérisé en outre en ce que** les informations de retards de propagation des trajets radio pour ledit signal reçu (49, 59, 69, 84) sont obtenues dudit estimateur de retards (44), et **en ce que** les informations sont ensuite fournies à un râteau (45) et parallèlement audit moyen (47) afin de calculer la position d'un instant de crête dudit signal reçu, ledit moyen (47) utilisant lesdites informations de retards de trajets et des informations sur les filtres d'émetteur et de récepteur pour calculer la différence entre les instants d'échantillonnage actuel et optimal, et
**en ce que** ledit moyen d'ajustement desdits instants d'échantillonnage (88) dudit signal reçu audit instant de crête étant un étage logique d'horloge (43) qui ajuste l'horloge dudit convertisseur analogique-numérique (42) à l'aide de cette différence.

**22.** Dispositif selon la revendication 20, dans lequel ledit moyen (47) de calcul de la position dudit instant de crête calcule ladite différence à partir d'une forme d'impulsion composite précalculée de la chaîne de transmission, constituée des filtres d'émetteur et de récepteur.

**23.** Dispositif selon la revendication 20, **caractérisé en outre en ce que** ledit instant d'échantillonnage est fondé sur une horloge interne (53, 63) du dispositif récepteur,
ledit signal échantillonné ($y_n$) qui est suréchantillonné à un taux d'échantillonnage N est ensuite injecté à un moyen de sous-échantillonnage (58, 68) fonctionnant à un taux d'échantillonnage M, la sortie (60) dudit moyen de sous-échantillonnage (58, 68) étant injectée à un râteau (55, 65) à un taux de suréchantillonnage de N/M,
les retards des trajets radio sont estimés par ledit estimateur de retards (54, 64),

les informations de retards de trajets fournis en sortie par l'estimateur de retards (54, 64) sont injectées à une unité de commande (57, 67),

ladite unité de commande (57, 67) calcule une information d'instant optimal d'échantillonnage et transforme lesdites informations en une phase équivalente d'échantillonnage, et

**en ce que** les informations sont injectées audit moyen de sous-échantillonnage (58, 68) pour corriger la phase d'échantillonnage dudit moyen de sous-échantillonnage (58, 68).

24. Dispositif selon la revendication 23, **caractérisé en outre en ce que** ledit estimateur de retards (54, 64) reçoit ledit signal suréchantillonné N fois ($y_n$).

25. Dispositif selon la revendication 23, **caractérisé en outre en ce que** ledit estimateur de retards (54, 64) reçoit ledit signal numérique suréchantillonné N/M fois (60).

26. Dispositif selon l'une quelconque des revendications 23 à 25, dans lequel les taux de suréchantillonnage dans ledit convertisseur analogique-numérique (CAN) (42, 52, 62, 85) et à l'entrée du râteau sont les mêmes,

**caractérisé en outre en ce que** ledit dispositif recueille M exemplaires différents du profil PDP, chacun avec le décalage d'instant d'échantillonnage de $\Delta t^{(i)} = i \dfrac{T_s}{M}$, où i = 0, ..., M - 1 et $T_s$ est l'instant d'échantillonnage, et lesdits exemplaires recueillis sont superposés par ledit dispositif.

27. Dispositif selon l'une quelconque des revendications 19 à 26, comprenant en outre :

un moyen destiné à calculer une indication métrique indiquant s'il faut réaliser un ajustement de l'instant d'échantillonnage, dans une situation de réception, au moment de la réception dudit signal, et

un moyen destiné à autoriser l'ajustement desdits instants d'échantillonnage en fonction de ladite indication métrique.

28. Dispositif selon l'une quelconque des revendications 19 à 27, **caractérisé en ce que** ledit récepteur est un terminal mobile.

29. Dispositif selon l'une quelconque des revendications 19 à 27, **caractérisé en ce que** ledit récepteur est une station de base.

**Fig. 1**

**3** ↘

**30** ⌇

**39** ⌇

**33** ⌇ | **Clock**

**31** ⌇ | **Fe RX** —y(t)→ **ADC**
**32** ⌇

**34** ⌇ | **Delay Estimator**

Path delay info

—y$_n$→ **RAKE** —D→ **Detect**
**35** ⌇            **36** ⌇

## Fig. 2

**4** ↘

**40** ⌇

**49** ⌇

**44** ⌇ | **Delay Estimator**

**43** ⌇ | **Clock** ←Δt— **CU** ←
**47** ⌇

Path delay info

**41** ⌇ | **Fe RX** —y(t)→ **ADC**
**42** ⌇

—y$_n$→ **RAKE** —D→ **Detect**
**45** ⌇            **46** ⌇

## Fig. 4

**Fig. 3**

**54**

Delay
Estimator

**5**

**53** Clock

**57**

CU

Path delay info

**51**

**59** Fe RX — y(t)→ ADC — y$_n$→ M → RAKE — D→ Detect →

**52** **58** **55** **56**

# Fig. 5

**64**

Delay
Estimator

**6**

**63** Clock

**67**

CU

Path delay info

**61**

**69** Fe RX —y(t)→ ADC — y$_n$→ M → RAKE —D→ Detect →

**62** **68** **60** **65** **66**

# Fig. 6

100

receive y(t) — 101

↓

sample y(t) to $y_n$ — 102

↓

compute peak
instant of y(t) by
matched filtering — 103

↓

yes — adjusting
advisable? — no

105

104 — adjust sampling
instants of y(t)

do NOT adjust
sampling instants
of y(t) — 106

# Fig. 7

8

85

84 → ADC → delay estimator ← 86

80

adjusting means ← detecting means

88    87

## Fig. 8

9    90    91    computer

93

92 → ADC → delay estimator ⌐ 94

sampling instant adjustment ← peak instant detection ←

96    95

## Fig. 9